# EUROPEAN PATENT SPECIFICATION

(11) **EP 1 240 481 B1**
(45) Date of publication and mention of the grant of the patent: **20.08.2008**
(21) Application number: 00987596.4
(22) Date of filing: 22.12.2000
(51) Int. Cl.: G01F 11/02

(54) **LIQUID DISPENSING DEVICE**
VORRICHTUNG ZUR ABGABE VON FLÜSSIGKEITEN
DISPOSITIF DE DISTRIBUTION DE LIQUIDE

(30) Priority: 24.12.1999 EP 99310598
(43) Date of publication of application: 18.09.2002
(73) Proprietor: Avantium International B.V., 1000 CX Amsterdam (NL)
(72) Inventor: VAN DEN BRINK, Peter, John, NL-1000 CX Amsterdam (NL); PESCARMONA, Paolo, Prospero, Delftchemtch, NL-2628 BL Delft (NL); VAN DER WAAL, Jan, Cornelis, NL-1031 CM Amsterdam (NL)
(74) Representative: Wittop Koning, Tom Hugo
(86) International application number: PCT/IB2000/002024
(87) International publication number: WO 2001/048443

(56) References cited:
- US-A- 4 189 943
- US-A- 4 483 927
- US-A- 5 192 504

## Description

The present invention relates to a liquid delivery device and, in particular, to a device for delivering predetermined quantities of at least two liquids. The invention also relates to an apparatus for performing chemical and physical operations using a liquid delivery device as aforementioned, and to a method of dispensing a plurality of liquids.

The desire to perform a multitude of chemical and/or physical operations in a short time is well-known, especially in the art of combinatorial chemistry. To be able to perform these operations, automated systems are needed for delivering predetermined quantities of different liquids to a plurality of reactor vessels.

Delivering a predetermined quantity of a liquid is typically performed by means for drawing in a liquid and means for ejecting a specified quantity of that liquid such as a piston-comprising pump, for example a syringe or the like. In automated devices, such as robotically-operated equipment, it is advantageous to deliver predetermined quantities of different liquids with the same pump, since fewer control means are needed thereby enabling the device to be more compact. However, using the same pump for different liquids can result in contamination of the different liquids with each other, since liquid remaining in the dead space of the pump after ejection may become mixed up with the liquid that is subsequently drawn in. It is known that contamination can be reduced by using a pump that contains a spacer liquid in an amount that can fill at least the dead space of the pump. The spacer liquid should be inert with respect to and immiscible with each of the liquids to be delivered.

A device for delivering predetermined quantities of different liquids while using one syringe containing a spacer liquid is known. However, it has been found that, if a wide variety of liquids (including aqueous and organic solutions) have to be delivered, contamination of the liquids with the spacer liquid and with each other easily occurs due to breaking up of the interface between the spacer liquid and the liquids to be delivered.

If a first liquid is drawn in a syringe or the like which already contains a spacer liquid, an interface is formed between the spacer liquid and the first liquid. During drawing in and ejection of the first liquid, the interface is mobilised and can break up due to shear forces occurring, for example, at the edges of the syringe, resulting in droplets of one of the liquids in the other. As a result, the ejected first liquid may be contaminated with the spacer liquid and spacer liquid comprising a small amount of the first liquid may remain in the syringe. When a second liquid is drawn into the syringe, it is easily contaminated with the residual first liquid. In the case of delivering small quantities of liquids, i.e. quantities of the order of microlitres up to millilitres, conduits which have an inner diameter of the order of 0.01 to 5 mm are typically used, most especially in the range of 0.5 to 1.5 mm. When using small conduits, the droplets formed typically have a diameter of the same order as the inner diameter of the conduit wherein they are formed. As a result, the droplets formed cannot move freely through the surrounding liquid and will be delivered as a contamination in the surrounding liquid. This phenomenon is sometimes known as "plug contamination".

US-A-4 483 927 describes a method of automatically analysing chemical substances contained in sample liquids.

US-A-4 189 943 describes an apparatus for transferring a liquid in one or more successive volumes, which apparatus is immediately reusable for transferring another different liquid.

US-A-5 192 504 discloses a minimum carryover container, and an automated analysis system incorporating the container.

It is therefore an object of the present invention to provide an improved device for delivering predetermined quantities, especially in the order of microlitres up to millilitres, of different liquids using a common pump, wherein contamination of the liquids with each other is minimised, including when the liquids to be delivered comprise organic solutions.

The invention is a device for dispensing a plurality of liquids, the device comprising:
(a) a plurality of containers;
(b) a selection valve moveable between a plurality of positions enabling fluid communication between a respective one of said plurality of containers and an opening and a position enabling fluid communication between said opening and an outlet;
(c) pump means connected to said opening, said pump means comprising;
   (i) a conduit connecting the pump means to said opening;
   (ii) a settling vessel arranged between the ends of the conduit, for accommodating a spacer liquid; wherein the internal diameter of the settling vessel is greater than the internal diameter of the conduit.

Preferably, the pump contains a spacer liquid which is inert with respect to and immiscible with any of the liquids to be delivered.

Preferably, the inner diameter of the settling vessel is at least two times greater than the inner diameter of the conduit. More preferably, the inner diameter of the settling vessel is at least three times greater than the inner diameter of the conduit. Most preferably, the inner diameter of the settling vessel is at least five times greater than the inner diameter of the conduit.

In a further aspect, the present invention relates to a method of dispensing a plurality of liquids, the method comprising;
a) providing sources of a plurality of different liquids;
b) providing a spacer liquid in a settling vessel, said spacer liquid being inert and immiscible with any of the liquids to be dispensed;
c) drawing a first liquid using pump means into the settling vessel
   via a selection valve operable between a plurality of positions enabling fluid connection between a respective source and an opening and a position enabling fluid connection between said opening and an outlet, such that said first liquid and said spacer liquid form an interface;
d) switching the selection valve to the position enabling fluid connection between said opening and said outlet;
e) delivering said first liquid from said settling vessel through said outlet via said opening using said pump means to move the spacer fluid and, hence, to move said first fluid;
f) switching the selection valve to another of the positions enabling fluid connection between a source of liquid and said opening;
g) drawing a second liquid using pump means into the settling vessel; and
h) repeating steps (c) to (g) as necessary to complete dispensing of said plurality of liquids;
wherein the settling vessel, being connected to the opening by a conduit, is arranged between the ends of the conduit and wherein the internal diameter of the settling vessel is greater than the internal diameter of the conduit connecting the settling vessel to said opening.

The invention will now be particularly described by way of example only with reference to the drawings, in which:
Figure 1 is a schematic drawing of a device in accordance with the invention;
Figure 2 is a view of part of the device illustrated in Figure 1, showing the position of the interface between a spacer liquid and a liquid to be delivered when the liquid to be delivered has just been drawn in using the pump, and
Figure 3 is a view similar to Figure 2 showing the position of the interface after much of the liquid to be delivered has already been dispensed.

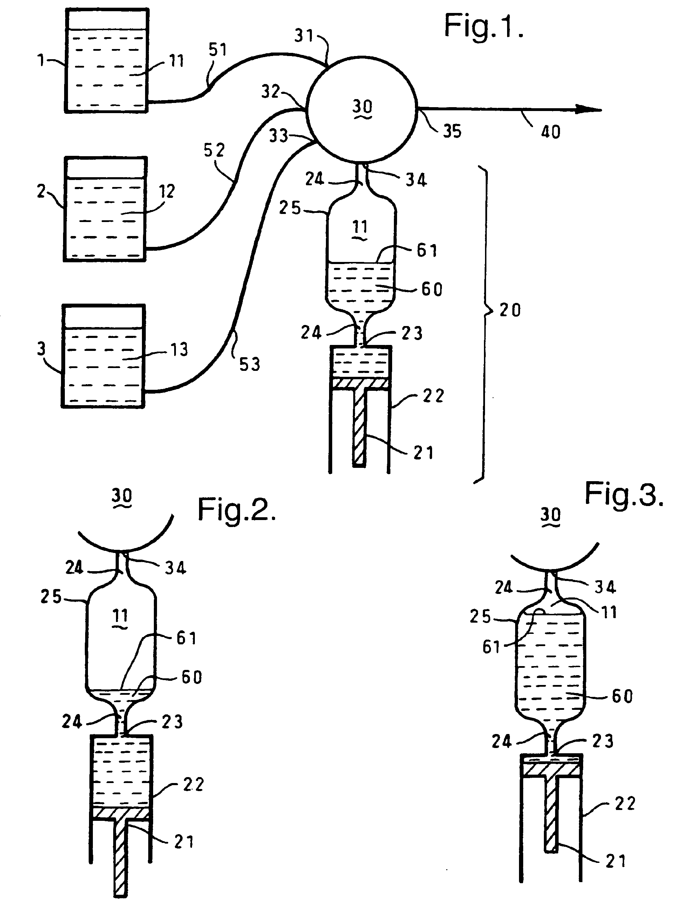

The device shown in Figure 1 comprises three containers 1, 2, 3, each containing a liquid 11, 12, 13 to be dispensed. It will be understood by persons skilled in the art that many more containers could be present, each containing a different liquid to be dispensed. Three containers have been used in this example merely for demonstrating the operating principles of the invention. The device further comprises a pump 20, a selection valve 30, and a delivery conduit 40. The selection valve 30 comprises a respective inlet 31, 32, 33 for each container, i.e. each inlet is connected to a respective one of the containers. The containers 1, 2, 3 are connected to the inlets 31, 32, 33 of the selection valve 30 by means of respective supply conduits 51, 52, 53. The selection valve 30 further comprises an opening 34 connected to the pump 20, and an outlet 35 connected to delivery conduit 40. The selection valve 30 can be set in four different positions, i.e. three positions allowing fluid communication between one of the inlets 31, 32, 33 and the opening 34, allowing one of the liquids 11, 12, 13 to be drawn into the pump 20, and one position allowing fluid communication between the opening 34 and the outlet 35, such that drawn-in liquid can be dispensed through the delivery conduit 40. The delivery conduit 40 may deliver the liquids to reactor vessels, such as vials or the like (not shown). In general, the selection valve 30 can be set in n+1 positions, where n is the number of inlets. In the present embodiment, this is equal to the number of containers for liquids to be delivered.

The pump 20 comprises a piston 21 in a cylinder 22 having an inlet and outlet opening 23. The inlet and outlet opening 23 is connected to the opening 34 of the selection valve 30 by conduit 24. An elongated settling vessel 25 is arranged between the ends of conduit 24. During normal operation of the device shown in Figure 1, the settling vessel contains a spacer liquid 60 which is inert with respect to and immiscible with any of the liquids 11, 12, 13 and may be disposed in a substantially vertical orientation.

The amount of spacer liquid 60 is such that the liquids to be delivered will not enter the cylinder 22, even when the maximum amount of liquid is drawn into the pump 20. In other words, the volume of spacer liquid 60 is larger than the displacement volume of piston 21. The volume and disposition of the settling vessel 25 is such that, during normal operation, the interface 61 between the liquid 11, 12 or 13 drawn in by the pump 20 and the spacer liquid 60 remains in the settling vessel 25.

Operation of the device will now be described.

The selection valve is set in one of the positions allowing fluid communication between an inlet 31, 32, 33 and the opening 34. Subsequently, the amount of one of the liquids 11, 12, 13 to be dispensed to one or more reaction vessels (not shown) is drawn in by the pump 20, such that the interface 61 between the drawn-in liquid and the spacer liquid 60 remains in the settling vessel 25 at a first position. This first position of the interface 61 in the settling vessel 25 is illustrated in Figure 2, which shows the situation wherein the amount of liquid 11 to be delivered is drawn into the pump 20. Subsequently, the selection valve is set in the position allowing fluid communication between the opening 34 and the outlet 35 and predetermined quantities of liquid 11 are dispensed via the delivery outlet 40 to the reaction vessel(s) (not shown). The size of the settling vessel 25 is such that, after delivery of liquid 11, the interface 61 between liquid 11 and spacer liquid 60 still remains in the settling vessel 25, at a second position which is shown in Figure 3.

After delivery of liquid 11 to the reaction vessel(s), the liquid 11 remaining in the pump is ejected, preferably such that no spacer liquid 60 enters the delivery conduit 40. The selection valve 30 is subsequently set in the position wherein fluid communication between, say, inlet 32 and the opening 34 is allowed. Then, an amount of liquid 12 is drawn in by the pump, such that the interface 61 between the drawn-in liquid 12 and the spacer liquid 60 is in the settling vessel 25 at a first position. This may be a different first position from the first position that was established for liquid 11, and will be determined by the total volume of each liquid that is to be dispensed to the reaction vessel(s). In some circumstances, it may be preferable to draw in the same amount of each liquid to be delivered, even though different quantities of these liquids will actually be dispensed to the reaction vessel(s). In these circumstances, different volumes of the respective liquids to delivered will have to be eliminated to a waste reservoir after the completion of the dispensing operation to the reaction vessel(s). Subsequently, the selection valve is set in the position allowing fluid communication between the opening 34 and the outlet 35 and liquid is ejected from the pump to the delivery conduit 40. After having ejected the amount of liquid 11 still present in the delivery conduit 40, predetermined quantities of liquid 12 are dispensed to the reaction vessel(s) (not shown). The above-described procedure is repeated for all the liquids to be delivered.

As mentioned above, the device shown in Figure 1 has three containers for liquids to be delivered, which means that, at most, three different liquids can be delivered by the single pump 20. Preferably, the device according to the present invention comprises at least ten containers and a single pump, more preferably at least twenty containers and a single pump.

Preferably, the inner diameter of settling vessel 25 is at least two times greater than the inner diameter of conduit 24, more preferably at least three times greater, and most preferably at least five times greater. The inner diameter of settling vessel 25 is defined as the inner diameter between the first and second positions of the interface 61 described above and shown in Figures 2 and 3. Typically, the inner diameter of settling vessel 25 is not larger than twenty times greater than the inner diameter of conduit 24.

The device according to the present invention will preferably be applied for delivering small quantities of different liquids, typically of the order of micro litres. In devices for such small quantities, the inner diameter of conduits, such as conduit 24, is typically of the order of 0.05 to 1.5 mm. Thus, the inner diameter of the settling vessel 25 is preferably at least 3 mm, more preferably at least 5 mm, and most preferably at least 8 mm.

It has been found that the use of a settling vessel according to the present invention significantly reduces the occurrence of breaking up of the interface 61 and thus the number of droplets formed of one of the liquid phases in the other liquid or liquids. Moreover, if droplets are formed, the width of the settling vessel 25 allows the droplets to pass each other and move freely in the surrounding liquid, such that they can reach the interface 61 and coalesce with it.

It will be appreciated that, during normal operation, the position of the settling vessel 25 with respect to the selection valve 30 and the supply conduits 51, 52, 53 is such that the liquid having the higher density is contained in the lower part of the settling vessel 25. In the embodiment illustrated in Figures 1 to 3, the spacer liquid 60 has a higher density than liquid 11 and, therefore, the settling vessel 25 is positioned below the selection valve 30. Persons skilled in the art will recognise that an alternative arrangement of the settling vessel 25 in relation to the selection valve 30 could be used if the spacer liquid 60 has a lower density than the liquids to be dispensed.

In order to minimise contamination, it is important that there is a density difference between the spacer liquid 60 and each of the liquids 11, 12, 13 to be dispensed. Preferably, the density difference is at least 0.05 x 10³ kg/m³, more preferably at least 0.1 x 10³ kg/m³.

Typically, the pump 20 will have one piston-comprising cylinder 22 and one settling vessel 25, such as shown in Figure 1. The device of the present invention may, however, comprise a pump having more than one piston-comprising cylinder connected to one settling vessel. More than one piston-comprising cylinder may be used advantageously if different accuracies are needed, for example if one of the liquids has to be delivered in the microlitre range and another in the millilitre range.

It has been found that fluorinated alkanes are very suitable as spacer liquids in the device according to the present invention, since fluorinated alkanes are inert and immiscible with a wide variety of both aqueous and organic solutions. Moreover, fluorinated alkanes have a high density, generally above 1.7 x 10³ kg /m^{3,} such that a sufficient density difference exists with a wide variety of aqueous and organic solutions. A further advantage of the use of fluorinated alkanes as spacer liquid is that fluorinated alkanes can easily be separated from aqueous and/or organic waste streams and are therefore suitable for recycling.

The liquids used for the spacer liquid need not be restricted to fluorinated alkanes. They may be organic liquids that comprise atoms other than carbon and fluorine, such as hydrogen, oxygen and/or nitrogen atoms. However, completely fluorinated alkanes, i.e. compounds consisting only of carbon and fluorine atoms, are preferred.

It will be appreciated that a spacer liquid has to be in the liquid phase under normal operating conditions. Typically, the device according to the invention is operated under atmospheric pressure and at a temperature in the range from 10 to 60°C. Therefore, preferred fluorinated alkanes have a carbon number in the range from 4 to 40. More preferred fluorinated alkanes have a carbon number in the range from 6 to 12. A particularly suitable fluorinated alkane is C₈F₁₀.

The device of the present invention may be a part of an apparatus for performing physical and/or chemical operations, for example in the art of combinatorial chemistry or rapid catalyst screening. The device may form part of an automated apparatus. Accordingly, the present invention further relates to an apparatus for performing physical and/or chemical operations comprising the device as described above.

In a variation of the device described above, a further container is provided for replenishing the spacer liquid. When the apparatus has been primed with a first liquid to be dispensed, and after all of the reaction vessels downstream of the delivery conduit 40 have received their respective quantities of the first liquid, there may be a residual amount of the first liquid present in the device. Before a second liquid can be drawn in via the pump, the residual first liquid must be eliminated. This can be done by venting the residual first liquid to a waste reservoir via the delivery conduit 40. As a consequence of this step, some of the spacer liquid 60 is also passed into the delivery conduit 40, so the spacer liquid 60 needs to be replenished to its former level by connecting the selector valve to a source, such as a further container, of spacer liquid. This is done as a preliminary step prior to switching the connector valve to a position allowing fluid communication between another of the inlets 31, 32, 33 and the opening 34.

Although the invention has been particularly described above with reference to specific embodiments, it will be understood by persons skilled in the art that variations and modifications are possible without departing from the scope of the claims which follow.

## Claims

1. A device for dispensing a plurality of liquids, the device comprising:
(a) a plurality of containers;
(b) a selection valve moveable between a plurality of positions enabling fluid communication between a respective one of said plurality of containers and an opening and a position enabling fluid communication between said opening and an outlet;
(c) pump means connected to said opening, said pump means comprising;
(i) a conduit connecting the pump means to said opening;
(ii) a settling vessel arranged between the ends of the conduit, for accommodating a spacer liquid; wherein the internal diameter of the settling vessel is greater than the internal diameter of the conduit.

2. A device according to claim 1 containing a spacer liquid in the settling vessel, said spacer liquid being inert with respect to and immiscible with any of the liquids to be delivered.

3. A device according to claim 1 or claim 2, wherein the internal diameter of the settling vessel is at least twice as great as the internal diameter of the conduit.

4. A device according to claim 3, wherein the internal diameter of the settling vessel is at least three times as great as the internal diameter of the conduit.

5. A device according to claim 4, wherein the internal diameter of the settling vessel is at least five times as great as the internal diameter of the conduit.

6. A device according to any of the preceding claims 2-5, wherein the spacer liquid is a fluorinated alkane.

7. A device according to any of the preceding claims 2-6, wherein the spacer liquid is a compound consisting only of carbon and fluorine atoms.

8. A device according to claim 6, wherein the fluorinated alkane has a carbon number in the range from 4 to 40.

9. A device according to claim 8, wherein the fluorinated alkane has a carbon number in the range from 6 to 12.

10. An apparatus for performing physical and/or chemical operations comprising a device in accordance with any of the preceding claims.

11. A method of dispensing a plurality of liquids, the method comprising;
a) providing sources of a plurality of different liquids;
b) providing a spacer liquid in a settling vessel, said spacer liquid being inert and immiscible with any of the liquids to be dispensed;
c) drawing a first liquid using pump means into the settling vessel via a selection valve operable between a plurality of positions enabling fluid connection between a respective source and an opening and a position enabling fluid connection between said opening and an outlet, such that said first liquid and said spacer liquid form an interface;
d) switching the selection valve to the position enabling fluid connection between said opening and said outlet;
e) delivering said first liquid from said settling vessel through said outlet via said opening using said pump means to move the spacer fluid and, hence, to move said first fluid;
f) switching the selection valve to another of the positions enabling fluid connection between a source of liquid and said opening;
g) drawing a second liquid using pump means into the settling vessel; and
h) repeating steps (c) to (g) as necessary to complete dispensing of said plurality of liquids;
wherein the settling vessel, being connected to the opening by a conduit, is arranged between the ends of the conduit and wherein the internal diameter of the settling vessel is greater than the internal diameter of the conduit connecting the settling vessel to said opening.

12. A method as claimed in claim 11, wherein the level of spacer liquid is replenished after each step of evacuating a liquid from the settling vessel.

## Patentansprüche

1. Vorrichtung zur Abgabe von mehreren Flüssigkeiten, wobei die Vorrichtung aufweist:
(a) mehrere Behälter;
(b) ein Auswahlventil, das zwischen mehreren Positionen bewegbar ist, die eine Fluidverbindung zwischen einem jeweiligen der mehreren Behälter und einer Öffnung ermöglichen, sowie einer Position, die eine Fluidverbindung zwischen der Öffnung und einem Auslaß ermöglicht;
(c) mit der Öffnung verbundene Pumpeneinrichtung, die aufweist:
(i) eine Leitung, die die Pumpeneinrichtung mit der Öffnung verbindet;
(ii) ein zwischen den Enden der Leitung angeordnetes Absetzgefäß zur Aufnahme einer Distanzflüssigkeit; wobei der Innendurchmesser des Absetzgefäßes größer ist als der Innendurchmesser der Leitung.

2. Vorrichtung nach Anspruch 1, die eine Distanzflüssigkeit in dem Absetzgefäß enthält, wobei die Distanzflüssigkeit inert bezüglich und unvermischbar mit jeder der abzugebenden Flüssigkeiten ist.

3. Vorrichtung nach Anspruch 1 oder Anspruch 2, wobei der Innendurchmesser des Absetzgefäßes mindestens doppelt so groß wie der Innendurchmesser der Leitung ist.

4. Vorrichtung nach Anspruch 3, wobei der Innendurchmesser des Absetzgefäßes mindestens drei Mal so groß wie der Innendurchmesser der Leitung ist.

5. Vorrichtung nach Anspruch 4, wobei der Innendurchmesser des Absetzgefäßes mindestens fünf Mal so groß wie der Innendurchmesser der Leitung ist.

6. Vorrichtung nach einem der vorstehenden Ansprüche 2 bis 5, wobei die Distanzflüssigkeit ein fluoriertes Alkan ist.

7. Vorrichtung nach einem der vorstehenden Ansprüche 2 bis 6, wobei die Distanzflüssigkeit eine Verbindung ist, die nur aus Kohlenstoff- und Fluoratomen besteht.

8. Vorrichtung nach Anspruch 6, wobei das fluorierte Alkan eine Kohlenstoff-Anzahl im Bereich von 4 bis 40 hat.

9. Vorrichtung nach Anspruch 8, wobei das fluorierte Alkan eine Kohlenstoff-Anzahl im Bereich von 6 bis 12 hat.

10. Gerät zur Durchführung physikalischer und/oder chemischer Prozesse, das eine Vorrichtung nach einem der vorstehenden Ansprüche aufweist.

11. Verfahren zur Abgabe von mehreren Flüssigkeiten, wobei das Verfahren aufweist:
a) Bereitstellen von Quellen mehrerer unterschiedlicher Flüssigkeiten;
b) Bereitstellen einer Distanzflüssigkeit in einem Absetzgefäß, wobei die Distanzflüssigkeit inert und unvermischbar mit jeder der abzugebenden Flüssigkeiten ist;
c) Saugen einer ersten Flüssigkeit über ein Auswahlventil und unter Verwendung einer Pumpeneinrichtung in das Absetzgefäß, derart, daß die erste Flüssigkeit und die Distanzflüssigkeit eine Grenzfläche bilden, wobei das Auswahlventil zwischen mehreren Positionen, die eine Fluidverbindung zwischen einer jeweiligen Quelle und einer Öffnung ermöglichen, sowie einer Position betätigbar ist, die eine Fluidverbindung zwischen der Öffnung und einem Auslaß ermöglicht;
d) Umschalten des Auswahlventils in die Position, die eine Fluidverbindung zwischen der Öffnung und dem Auslaß ermöglicht;
e) Abgeben der ersten Flüssigkeit aus dem Absetzgefäß durch den Auslaß über die Öffnung, wobei die Pumpeneinrichtung verwendet wird, um die Distanzflüssigkeit zu bewegen und folglich das erste Fluid zu bewegen;
f) Umschalten des Auswahlventils in eine andere der Positionen, die eine Fluidverbindung zwischen einer Flüssigkeitsquelle und der Öffnung erlauben;
g) Saugen einer zweiten Flüssigkeit in das Absetzgefäß unter Verwendung einer Pumpeneinrichtung; und
h) Wiederholen der Schritte (c) bis (g) wie erforderlich, um eine Abgabe der mehreren Flüssigkeiten vollständig durchzuführen;
wobei das durch eine Leitung mit der Öffnung verbundene Absetzgefäß zwischen den Enden der Leitung angeordnet ist und wobei der Innendurchmesser des Absetzgefäßes größer ist als der Innendurchmesser der Leitung, die das Absetzgefäß mit der Öffnung verbindet.

12. Verfahren nach Anspruch 11, wobei nach jedem Schritt des Absaugens von Flüssigkeit aus dem Absetzgefäß die Distanzflüssigkeit wieder auf ihren Pegel aufgefüllt wird.

## Revendications

1. Dispositif pour délivrer de multiples liquides, dispositif qui comprend :
(a) de multiples récipients ;
(b) une vanne de sélection mobile entre plusieurs positions permettant une communication fluidique entre un récipient correspondant parmi lesdits multiples récipients et une ouverture et une position permettant une communication fluidique entre ladite ouverture et un orifice de sortie ;
(c) des moyens de pompage reliés à ladite ouverture, lesdits moyens de pompage comprenant :
(i) un conduit reliant les moyens de pompage à ladite ouverture ;
(ii) un vase de décantation disposé entre les extrémités du conduit pour recevoir un liquide intercalaire, dans lequel le diamètre intérieur du vase de décantation est supérieur au diamètre intérieur du conduit.

2. Dispositif selon la revendication 1, contenant un liquide intercalaire dans le vase de décantation, ledit liquide intercalaire étant inerte vis-à-vis de tous les liquides destinés à être délivrés et non miscible avec ceux-ci.

3. Dispositif selon la revendication 1 ou la revendication 2, dans lequel le diamètre intérieur du vase de décantation est au moins deux fois supérieur au diamètre intérieur du conduit.

4. Dispositif selon la revendication 3, dans lequel le diamètre intérieur du vase de décantation est au moins trois fois supérieur au diamètre intérieur du conduit.

5. Dispositif selon la revendication 4, dans lequel le diamètre intérieur du vase de décantation est au moins cinq fois supérieur au diamètre intérieur du conduit.

6. Dispositif selon l'une quelconque des revendications 2 à 5 précédentes, dans lequel le liquide intercalaire est un alcane fluoré.

7. Dispositif selon l'une quelconque des revendications 2 à 6 précédentes, dans lequel le liquide intercalaire est un composé constitué uniquement d'atomes de carbone et de fluor.

8. Dispositif selon la revendication 6, dans lequel l'alcane fluoré a un nombre de carbone dans la plage de 4 à 40.

9. Dispositif selon la revendication 8, dans lequel l'alcane fluoré a un nombre de carbone dans la plage de 6 à 12.

10. Appareil pour réaliser des opérations physiques et/ou chimiques, comprenant un dispositif selon l'une quelconque des revendications précédentes.

11. Procédé pour délivrer de multiples liquides, procédé qui comprend les étapes consistant à _{:}
a) prévoir des sources de multiples liquides différents ;
b) prévoir un liquide intercalaire dans un vase de décantation, ledit liquide intercalaire étant inerte et non miscible avec tous les liquides destinés à être délivrés ;
c) soutirer un premier liquide à l'aide de moyens de pompage dans le vase de décantation par l'intermédiaire d'une vanne de sélection apte à agir entre plusieurs positions permettant une liaison fluidique entre une source correspondante et une ouverture et une position permettant une liaison fluidique entre ladite ouverture et un orifice de sortie, afin que ledit premier liquide et ledit liquide intercalaire forment une interface ;
d) faire passer la vanne de sélection dans la position permettant une liaison fluidique entre ladite ouverture et ledit orifice de sortie ;
e) délivrer ledit premier liquide à partir dudit vase de décantation à travers ledit orifice de sortie par l'intermédiaire de ladite ouverture à l'aide desdits moyens de pompage pour déplacer le fluide intercalaire et, par conséquent, ledit premier fluide ;
f) faire passer la vanne de sélection dans une autre des positions permettant une liaison fluidique entre une source de liquide et ladite ouverture ;
g) soutirer un second liquide à l'aide de moyens de pompage dans le vase de décantation ; et
h) répéter les étapes (c) à (g) en fonction des besoins pour délivrer la totalité desdits multiples liquides ;
dans lequel le vase de décantation qui est relié à l'ouverture par un conduit est disposé entre les extrémités du conduit, et dans lequel le diamètre intérieur du vase de décantation est supérieur au diamètre intérieur du conduit reliant le vase de décantation à ladite ouverture.

12. Procédé tel que défini dans la revendication 11, dans lequel le niveau de liquide intercalaire est regarni après chaque étape d'évacuation d'un liquide hors du vase de décantation.
